# EUROPEAN PATENT SPECIFICATION

(11) **EP 4 183 634 B1**
(45) Date of publication and mention of the grant of the patent: **22.04.2026**
(21) Application number: 20945400.8
(22) Date of filing: 14.07.2020
(51) Int. Cl.: B60R 16/023, B60R 11/02

(54) **MOUNTING SUPPORT AND VEHICLE**
MONTAGETRÄGER UND FAHRZEUG
SUPPORT DE MONTAGE ET VÉHICULE

(43) Date of publication of application: 24.05.2023
(73) Proprietor: Ningbo Geely Automobile Research And Development Co., Ltd, Ningbo, Zhejiang 315336 (CN); Zhejiang Geely Holding Group Co., Ltd, Hangzhou, Zhejiang 310051 (CN)
(72) Inventor: CHEN, Guoquan, Hangzhou Bay New District Ningbo, Zhejiang 315336 (CN); LI, Guolin, Hangzhou Bay New District Ningbo, Zhejiang 315336 (CN); LI, Yihua, Hangzhou Bay New District Ningbo, Zhejiang 315336 (CN)
(74) Representative: Murgitroyd & Company
(86) International application number: PCT/CN2020/101770
(87) International publication number: WO 2022/011526

(56) References cited:
- CN-A- 109 076 711
- CN-U- 204 222 759
- CN-U- 205 971 166
- CN-U- 208 576 515
- CN-U- 210 554 181
- CN-U- 210 554 181
- CN-U- 210 707 260
- JP-A- 2018 179 267
- KR-A- 20190 142 912
- US-A- 6 076 877

## Description

### Technical Field

The present application relates to the technical field of mounting brackets, and more particularly to a mounting bracket for a controller, and a vehicle.

### Background Art

With the guidance and support of national industrial policies, the technology of new energy vehicles is constantly developing, and functions of the same are also being enriched. Among other things, in the current framework development, a vehicle body domain controller (hereinafter referred to as CEM) provides a control strategy for the realization of various functions. Since it is necessary to realize the functions of a lock, a door, a cover, a lamp, a seat, a key, a start-up, electric charging, a power supply, an air conditioner, a windscreen wiper, defrosting, tire pressure, a window, anti-theft, an immobilizer (an engine anti-theft locking system, simplified as Immo), signal acquisition, lamp driving, motor driving, etc., hundreds of controllers are integrated on the CEM, resulting in a hardware outline exceeding 150mm and a weight exceeding 500g. But limited by the layout space, there is no matching mounting point available for direct fixation. Therefore, one separate mounting bracket needs to be developed for the fixation to the vehicle body.

Due to the importance of the CEM, it is usually placed in an area of a cab near the A-pillar. However, as many wiring harnesses and upholsteries are placed in this area, the mounting bracket needs to avoid many peripheral components, resulting in the weakening of the structural strength of the mounting bracket. At the same time, the bumping and vibration at driving are easy to cause damage to the CEM, resulting in high requirements for the modality and fatigue strength of the mounting bracket. Generally, the mounting bracket needs to have three mounting points fixed to the vehicle body to meet the requirements.

Nowadays, a mounting bracket is generally provided with one base plate, wherein the base plate is fixed to the vehicle body by providing one first mounting hole on the base plate and fastening the CEM by a bolt, and then providing three second mounting holes. This structure has the following drawbacks: 1. the size of the CEM shell of a new energy vehicle is gradually increasing, but due to the limitation by the layout space, it leads to the contradiction among the requirements for the mounting bracket to continuously reduce the specification, simplify the part composition, and continuously improve the product performance (the modality, fatigue strength, etc.); 2. in most scenarios of the pre-assembling of the CEM to the mounting bracket, the threaded connection is adopted, and the hardware shell of the CEM needs to be welded with a fastener, resulting in further shell size increase, complex structure, and high cost; 3. the traditional vehicle-type mounting bracket is not applicable for the platform-based design, and the bandwidth provided by the mounting bracket is insufficient, resulting in more elongated designing cycles of new products.

CN210707260U relates to a noise-proof structure to prevent noise from being generated when the ECU is subjected to external forces.

CN210554181U relates to a gearbox controller mounting bracket, which has the advantages of more optimized structure, more convenient disassembly and maintenance, more cost saving and the like.

### Summary of the Invention

In order to solve the above-mentioned technical problem, the mounting bracket disclosed in the present application can reduce the matching accuracy of the vehicle body domain controller by additionally providing a supporting surface on the base plate; and provide a clamping hole so that the vehicle body domain controller is directly connected to the base plate in a clamping manner so as to reduce the number of the components and parts so that the mounting is simpler and the fastness is better.

In order to achieve the above-mentioned purpose of the invention, the present application provides a mounting bracket for mounting a vehicle body domain controller, wherein the mounting bracket comprises a base plate and at least two clamping holes;

the base plate comprises a working face; at least one supporting surface is formed on the working face for supporting the vehicle body domain controller;

the clamping hole is provided on the base plate, and the clamping hole is used for being in clamping connection with the vehicle body domain controller.

In one embodiment, three supporting surfaces are provided, and lines connecting the center points of the three supporting surfaces form a triangle;

the supporting surface can be adjusted in positions on the working face.

According to the invention, at least one first protruding portion is provided on the base plate in a direction toward the working face, and the top surface of the first protruding portion forms the supporting surface.

According to the invention, at least one auxiliary clamping structure is further provided on the working face, and the auxiliary clamping structure is formed with a second protruding portion in the direction towards the working face;
the distance between the apex of the second protruding portion and the working face is greater than the distance between the apex of the first protruding portion and the working face;
the auxiliary clamping structure is used for the auxiliary clamping of the vehicle body domain controller.

In one embodiment, four auxiliary clamping structures are provided;
the four auxiliary clamping structures are provided on two opposite side faces of the base plate, and two auxiliary clamping structures are provided on each side face.

In one embodiment, at least one reinforcing rib is further provided on the working face of the base plate, and the reinforcing rib protrudes in the direction toward the working face;
the distance between the protruding apex of the reinforcing rib and the working face is smaller than the distance between the apex of the first protruding portion and the working face.

In one embodiment, three reinforcing ribs are provided, and an included angle is formed between every two reinforcing ribs in the three reinforcing ribs.

In one embodiment, the base plate is provided with a bending portion bending towards the working face, and the clamping hole is provided on the bending portion.

In one embodiment, four clamping holes are provided, and each of the clamping holes is used for being in clamping connection with the vehicle body domain controller;
the distance between any two of the clamping holes can be adjusted.

In one embodiment, four clamping holes are arranged on two opposite side faces of the base plate, and two clamping holes are arranged on each side face;
the distance between two clamping holes arranged opposite to each other can be adjusted.

In one embodiment, the base plate is further provided with at least one mounting and positioning hole penetrating through the base plate, and the mounting and positioning hole is used for guiding and fixing the vehicle body domain controller.

In one embodiment, two mounting and positioning holes are provided, and the two mounting and positioning holes are respectively provided on two opposite side faces of the base plate.

In one embodiment, a pre-hanging structure is further provided on the base plate, and the pre-hanging structure is provided on a face of the base plate opposite to the working face;
the pre-hanging structure is integrally connected with the base plate.

In one embodiment, a pre-hanging structure is further included; the pre-hanging structure is provided on one face of the base plate opposite to the working face;
the pre-hanging structure is used for pre-hanging the base plate on a vehicle body;
the base plate is provided with an opening structure;
a portion of the pre-hanging structure is exposed from the opening structure.

In one embodiment, the pre-hanging structure is a hook;
one end of the hook is integrally connected to the base plate, and the hook bends in a direction toward one face opposite to the working face.

In one embodiment, the base plate is provided with a recessed portion, and the recessed portion protrudes in a direction toward one face opposite to the working face;
the recessed portion is used for adapting to the vehicle body;
the pre-hanging structure is provided on the recessed portion.

In one embodiment, the base plate is also provided with two connecting holes for fixing the base plate on the vehicle body.

Specific advantages are as follows: in the mounting bracket disclosed in the present application, the matching accuracy of the vehicle body domain controller can be reduced by additionally providing a supporting surface on the base plate, and the clamping hole is provided so that the vehicle body domain controller is in direct clamping connection with the base plate, reducing the number of components and parts and making the mounting simpler and the fastness better.

The present application also describes a vehicle, comprising a vehicle body domain controller and the above-mentioned mounting bracket, wherein the vehicle body domain controller is fixed to a supporting surface on the mounting bracket via the clamping hole, and the mounting bracket is fixedly connected to the vehicle body via a connecting hole on the base plate. Specific advantages are as follows: the vehicle disclosed in the present application realizes mounting the vehicle body domain controller on the vehicle body by making full use of the features on the mounting bracket itself, not only saving space in the vehicle, but also making the mounting more reliable.

In one embodiment, the vehicle body domain controller is provided with at least two clamping ears and at least one positioning pin, and the clamping ear is in a clamping connection with the clamping hole;
the positioning pin is in a matching connection with the mounting and positioning hole on the base plate.

In one embodiment, four clamping ears are provided, and each of the clamping ears is in a clamping connection with the clamping hole;

two positioning pins are provided, and each of the positioning pins cooperates with the mounting and positioning hole for guiding.

### Brief Description of the Drawings

In order to explain the technical solutions and advantages of the embodiments of the present application or in the prior art more clearly, the following simple description will be given to the accompanying drawings which need to be used in the description of the embodiments or the prior art; it is obvious that the drawings in the description below are merely some embodiments of the present application, and for those of ordinary skills in the art, without involving creative efforts, other drawings can be obtained from these drawings.
Fig. 1 is a schematic view of a structure of a mounting bracket;
Fig. 2 is a schematic view of a three-dimensional structure of a mounting bracket;
Fig. 3 is a cross-sectional view taken along the line A-A in Fig. 1;
Fig. 4 is a cross-sectional view taken along the line B-B in Fig. 1;
Fig. 5 is a cross-sectional view taken along the line C-C in Fig. 1;
Fig. 6 is a cross-sectional view taken along the line D-D in Fig. 1;
Fig. 7 is a schematic view of the structure of a vehicle body domain controller and a mounting bracket;
Fig. 8 is a cross-sectional view taken along the line A-A in Fig. 7;
Fig. 9 is a schematic view showing the structure in which a vehicle body domain controller and a mounting bracket are mounted to a vehicle body;
the reference numerals in the drawings correspond to: 1-working face, 2-clamping hole, 3-supporting surface, 301-first protruding portion, 4-auxiliary clamping structure, 401-second protruding portion, 5-mounting and positioning hole, 6-reinforcing rib, 7-pre-hanging structure, 701-hook, 702-opening structure, 8-connecting hole, 9-vehicle body domain controller, and 10-recessed portion.

### Detailed Description of the Invention

In order to make the purpose, technical solutions, and advantages of the present application clearer, the application will be further described in detail in combination with the accompanying drawings.

It needs to be noted that the terms "first", "second", and the like in the description and in the claims of the present application and in the above-described drawings are used for distinguishing between similar objects and not necessarily for describing a particular sequential or chronological order. The terms "comprise" and "have", as well as any variations thereof, are intended to cover a non-exclusive inclusion. In different embodiment variations, the same components have the same reference numerals.

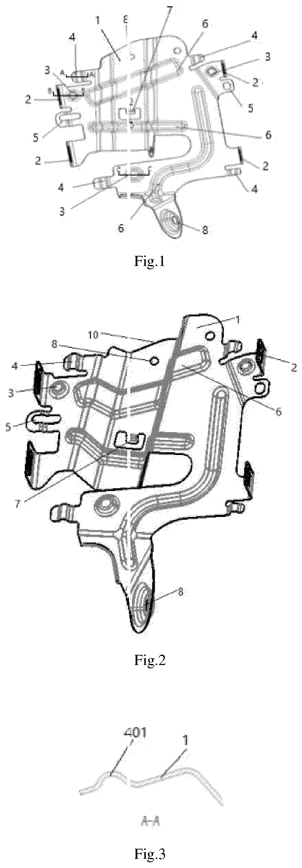

As shown in Fig. 1, the present application discloses a plane structural schematic view of a mounting bracket. The mounting bracket is used for mounting a vehicle body domain controller 9, and the mounting bracket comprises a base plate and at least two clamping holes 2;
the base plate comprises a working face 1; at least one supporting surface 3 is formed on the working face 1, and the supporting surface 3 is used for supporting the vehicle body domain controller 9;
the clamping hole 2 is opened in the base plate, and the clamping hole 2 is used for being in clamping connection with the vehicle body domain controller 9.

The base plate is used for being connected with a vehicle body; in the present application, the matching accuracy of the vehicle body domain controller can be reduced by additionally providing a supporting surface on the base plate, and the clamping hole is provided so that the vehicle body domain controller is in a direct
clamping connection with the base plate, thereby reducing the number of the components and parts and making the mounting simpler and fastness better.

Preferably, three supporting surfaces 3 are provided, and lines connecting the center points of the three supporting surfaces form a triangle;
the supporting surface 3 can be adjusted in positions on the working face 1 so that the thickness of the vehicle body domain controller can be adjusted.

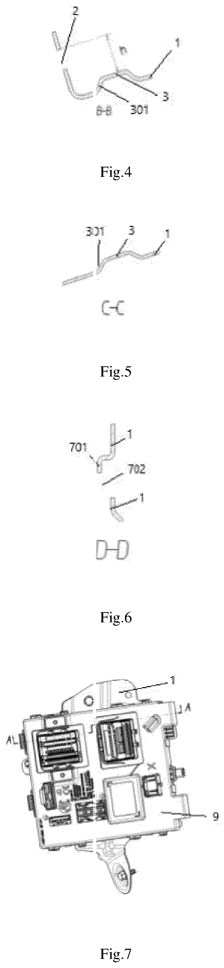

As shown in the structural views of Figs. 4 and 5, at least one first protruding portion 301 is provided on the base plate in a direction towards the working face 1, and the top surface of the first protruding portion 301 forms the supporting surface 3;
specifically, the first protruding portion 301 may be press-formed by the base plate, or may be fixed to the working face 1 of the base plate by welding or bonding, etc.

Preferably, three first protruding portions 301 may be provided;
The supporting surface 3 is formed on each of the first protruding portions 301.

As shown in Figs. 1 and 3, at least one auxiliary clamping structure 4 is further provided on the working face 1, and the auxiliary clamping structure 4 is formed with a second protruding portion 401 in the direction towards the working face 1;
the distance between the apex of the second protruding portion 401 and the working face 1 is greater than the distance between the apex of the first protruding portion 301 and the working face 1; the auxiliary clamping structure 4 is used for auxiliary clamping of the vehicle body domain controller 9. This design of the present application enables the second protruding portion 401 to exert an opposite force on the vehicle body domain controller 9 in the direction toward the first protruding portion 301 away from the working face 1, so that the auxiliary clamping structure 4 tightens and clamps the vehicle body domain controller 9, avoiding the vehicle body domain controller 9 mounted on the mounting bracket from shaking.

Preferably, four auxiliary clamping structures 4 are provided; the four auxiliary clamping structures 4 are arranged on two opposite side faces of the base plate, and two auxiliary clamping structures 4 are arranged on each side face;
as shown in Fig. 2, it can be seen that two auxiliary clamping structures 4 are provided on the first side of the base plate, and another two auxiliary clamping structures 4 are provided on one face opposite to the first side, wherein three auxiliary clamping structures 4 are respectively provided on the working face 1 at a position close to the three first protruding portions 301; in the present application, the support for the vehicle body domain controller 9 is realized via the supporting surface 3, the clamping hole 2 realizes the fixation of the vehicle body domain controller 9, and the auxiliary clamping structure 4 realizes the auxiliary clamping of the vehicle body domain controller 9; this design makes the present application achieve the mounting and fixation of the vehicle body domain controller 9 by means of the structure of the mounting bracket itself, reduce the number of other components and parts, and make the mounting simpler and fastness better.

As shown in Fig. 2, a schematic three-dimensional structure of a mounting bracket is shown; in an embodiment of the description, the base plate is provided with a bending portion bent toward the working face 1, and the clamping hole 2 is provided on the bending portion.

Preferably, four clamping holes 2 are provided, and each of the clamping holes 2 is used for being in clamping connection with the vehicle body domain controller 9;
the distance between any two of the clamping holes 2 can be adjusted.

Specifically, four clamping holes 2 are arranged on two opposite side faces of the base plate, and two clamping holes 2 are arranged on each side face;
the distance between two clamping holes 2 arranged opposite to each other can be adjusted.

Specifically, d as indicated in Fig. 7 may represent the distance between two clamping holes 2 arranged opposite to each other;
h as indicated in Fig. 4 may represent the distance between the supporting surface 3 and the clamping hole 2, and, preferably,
the distance between the supporting surface 3 and the clamping hole 2; this design enables the vehicle body domain controller to be fixed at different mounting positions, i.e. it enables the mounting bracket to mount different types of body area controllers, thereby increasing the suitability of the mounting bracket.

As shown in Figs. 1 and 2, the base plate is further provided with at least one mounting and positioning hole 5 penetrating through the base plate, and the mounting and positioning hole 5 is used for guiding and fixing the vehicle body domain controller 9.

Specifically, two mounting and positioning holes 5 are provided, and the two mounting and positioning holes 5 are respectively provided on two opposite side faces of the base plate.

The mounting and positioning hole 5 is used for guiding and fixing a positioning pin on the vehicle body domain controller 9.

As shown in Fig. 2, it can be seen that two clamping holes 2 are provided on the first side of the base plate, and another two clamping holes 2 are provided on one face opposite to the first side, wherein one mounting and positioning hole 5 is provided between two clamping holes 2 on the first side, and the other mounting and positioning hole 5 is provided between two clamping holes 2 on one face opposite to the first side on the base plate.

As shown in Figs 1, 2, and 6, a pre-hanging structure 7 is further included. The pre-hanging structure 7 is provided on one face of the base plate opposite to the working face 1;
the pre-hanging structure 7 is used for pre-hanging the base plate on a vehicle body; when the mounting bracket is fixed to the vehicle, firstly the mounting bracket is placed onto the vehicle body via the pre-hanging structure 7, and then the mounting bracket is fixed onto the vehicle body through the connecting hole 8.

An opening structure 702 is provided on the base plate;
a portion of the pre-hanging structure 7 is exposed from the opening structure 702.

Specifically, the opening structure 702 penetrates through the working face 1 of the base plate and one face opposite to the working face 1;
specifically, the pre-hanging structure 7 is a hook 701;
one end of the hook 701 is integrally connected to the base plate, and the hook 701 is bent in the direction toward one face opposite to the working face 1;
preferably, an inverted "Z"-shaped structure is formed between the hook 701 and the base plate;

Specifically, the pre-hanging structure 7 can be press-formed by the base plate; this design can reduce the weight and new parts, and achieve fast assembly and positioning.

The pre-hanging structure 7 may also be welded or bonded on the base plate;
As shown in Figs. 1 and 2, the base plate is also provided with two connecting holes 8 for fixing the base plate on the vehicle body.

The face where the two connecting holes 8 are located is in a different plane from the working face 1 of the base plate.

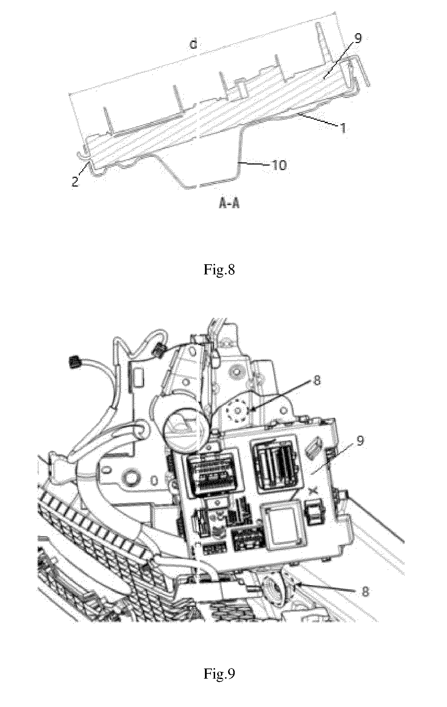

As shown in Figs. 2 and 8, the base plate is provided with a recessed portion 10, and the recessed portion 10 protrudes in the direction toward one face opposite to the working face 1;
the recessed portion 10 is for adapting to a vehicle body;
the pre-hanging structure is provided on the recessed portion 10.

Specifically, at least one recessed portion 10 is provided, and the recessed portion 10 may be a "U"-shaped recessed portion.

Specifically, three recessed portions 10 may be provided, each penetrating along the length direction through two opposite side edges of the base plate.

Specifically, one of the connecting holes 8 is provided on the "U"-shaped bottom face of the recessed portion 10 near the second side of the base plate, and the other connecting hole 8 is provided on one side edge of the base plate opposite to the second side.

As shown in Figs. 1 and 2, at least one reinforcing rib 6 is further provided on the working face 1 of the base plate, and the reinforcing rib 6 protrudes in the direction toward the working face 1;
the distance between the protruding apex of the reinforcing rib 6 and the working face 1 is less than the distance between an apex of the first protruding portion 301 and the working face 1; the reinforcing rib 6 provided in the present application is used for improving the rigidity and strength of the base plate, and has a significant improvement on the modality after the vehicle body domain controller 9 if fixed to the mounting bracket.

Specifically, three reinforcing ribs 6 are provided, and an included angle is formed between every two reinforcing ribs 6 in the three reinforcing ribs 6;
That is to say, if three reinforcing ribs 6 are extended, a situation may occur where every two reinforcing ribs 6 intersect with each other, but the length of the reinforcing ribs 6 is not limited in the present application.

Preferably, as shown in Figs. 1 and 2, preferably, the first reinforcing rib 6 may traverse the recessed portion 10, the second reinforcing rib 6 also penetrates through the recessed portion 10 and forms a certain angle with the first reinforcing rib 6, and the third reinforcing rib 6 is partially parallel to the recessed portion 10 and one end of the third reinforcing rib 6 extends to substantially one side edge. Such an arrangement is such that the strength of the support is reinforced without increasing the thickness of the support, satisfying the requirements of the modality.

As shown in Fig. 7, the present application also provides a schematic structural view of a vehicle body domain controller fixed to a mounting bracket; specifically, the vehicle body domain controller 9 is fixedly connected to the mounting bracket by being in clamping connection with the clamping hole 2.

As shown in Fig. 8, the vehicle body domain controller 9 is provided with a clamping ear which is in clamping connection with the clamping hole 2.

The present application also provides a method for connecting a vehicle body domain controller to a mounting bracket; specifically, a positioning pin on the vehicle body domain controller 9 is inserted into the mounting and positioning hole 5, and the relative positional relationship between the vehicle body domain controller 9 and the mounting bracket is determined through the guiding function of the mounting and positioning hole 5; after the positioning pin on the body area controller 9 enters the mounting and positioning hole 5, a slight force is applied until the mounting bracket contacts the three supporting surfaces, and at this time, the clamping ear on the body area controller 9 is also inserted into the clamping hole 2, and at the same time, the auxiliary clamping structure 4 exerts an opposite force on the body area controller 9 so as to make the connection between the mounting bracket and the body area controller 9 firm and avoid the scenario that the vehicle body domain controller 9 shakes.

As shown in Fig. 9, a schematic view of a partial structure of a vehicle body domain controller being fixed to a vehicle body via a mounting bracket is shown; the present application also provides a vehicle, comprising a vehicle body domain controller 9 and the above-mentioned mounting bracket, wherein the vehicle body domain controller 9 is fixed to a supporting surface 3 on the mounting bracket via the clamping hole 2, and the mounting bracket is fixedly connected to the vehicle body via a connecting hole 8 on the base plate.

Specifically, the vehicle body domain controller 9 is fixed in the vehicle near the dashboard near the A-pillar;
two connecting holes 8 are provided, and the two connecting holes 8 can be fixed to the vehicle body by a bolt.

The vehicle body domain controller 9 is provided with at least two clamping ears and at least one positioning pin, and the clamping ear is in clamping connection with the clamping hole 2;
the positioning pin is in a matching connection with the mounting and positioning hole 5 on the base plate 1.

Specifically, the number of clamping ears is the same as the number of clamping holes 2; the number of positioning pins is the same as the number of mounting and positioning holes 5.

Four clamping ears are provided, and each of the clamping ears is in a clamping connection with the clamping hole 2;
two positioning pins are provided, and each positioning pin cooperates with the mounting and positioning hole 5 for guiding.

The application also provides a method for a vehicle body domain controller to be fixed to a vehicle body through a mounting bracket.

Specifically, after the vehicle body domain controller 9 is fixed on the mounting bracket, the mounting bracket is hung on and connected to the vehicle body through the pre-hanging structure 7, so that the installer can quickly align the two connecting holes 8 with the vehicle body and the mounting bracket is fixedly connected with the vehicle body through a bolt or other fixing devices.

Specifically, the mounting bracket is pre-tightened by means of a bolt through one of the connecting holes 8 (which may be a connecting hole provided on the recessed portion 10), then the other mounting hole 8 is fastened by means of the bolt, and finally, the connecting hole earlier warned is fastened, thereby completing the assembly; such a mounting structure can reduce the labor intensity and working time of an installer.

In the mounting bracket disclosed in the present application, the matching accuracy of the vehicle body domain controller can be reduced by additionally providing a supporting surface 3 on the base plate, and the clamping hole 2 is provided so that the vehicle body domain controller 9 is in direct clamping connection with the base plate, reducing the number of components and parts and making the mounting simpler and the fastness better;

In addition, the vehicle disclosed in the present application realizes mounting the vehicle body domain controller on the vehicle body by making full use of the features on the mounting bracket itself, not only saving space in the vehicle, but also making the mounting more reliable.

The invention is defined by appended claims.

## Claims

1. A mounting bracket **characterized in that** the mounting bracket is used for mounting a vehicle body domain controller (9), and the mounting bracket comprises a base plate and at least two clamping holes (2); the base plate comprises a working face (1); at least one supporting surface (3) is formed on the working face (1), the supporting surface (3) being used for supporting the vehicle body domain controller (9);
the clamping holes (2) being provided on the base plate, and the clamping holes (2) being used for being in a clamping connection with the vehicle body domain controller (9);
wherein, at least one first protruding portion (301) is provided on the base plate in a direction toward the working face (1), and a top surface of the first protruding portion (301) forms the supporting surface (3);
wherein, at least one auxiliary clamping structure (4) is further provided on the working face (1), and the auxiliary clamping structure (4) forms a second protruding portion (401) in the direction toward the working face (1);the distance between the apex of the second protruding portion (401) and the working face (1) is greater than the distance between the apex of the first protruding portion (301) and the working face (1);
the auxiliary clamping structure (4) is used for auxiliary clamping of the vehicle body domain controller (9).

2. The mounting bracket according to claim 1, **characterized in that** three supporting surfaces (3) are provided, and connecting lines of center points of the three supporting surfaces form a triangle;
the supporting surface (3) can be adjusted in positions on the working face (1).

3. The mounting bracket according to claim 1, **characterized in that** four auxiliary clamping structures (4) are provided;
the four auxiliary clamping structures (4) are provided on two opposite side faces of the base plate, and two auxiliary clamping structures (4) are provided on each side face.

4. The mounting bracket according to claim 1, **characterized in that** the working face (1) of the base plate is further provided with at least one reinforcing rib (6) protruding in the direction toward the working face (1);
the distance between the protruding apex of the reinforcing rib (6) and the working face (1) is smaller than the distance between the apex of the first protruding portion (301) and the working face (1).

5. The mounting bracket according to claim 4, **characterized in that** three reinforcing ribs (6) are provided, and an included angle is formed between every two reinforcing ribs (6) of the three reinforcing ribs (6).

6. The mounting bracket according to claim 1, **characterized in that** the base plate is provided with a bending portion bending towards the working face (1), and the clamping hole (2) is provided on the bending portion.

7. The mounting bracket according to claim 6, **characterized in that** four clamping holes (2) are provided, and each of the clamping holes (2) is used for being in clamping connection with the vehicle body domain controller (9);
a distance between any two clamping holes (2) can be adjusted.

8. The mounting bracket according to claim 7, **characterized in that** four clamping holes (2) are provided on two opposite side faces of the base plate, and two clamping holes (2) are provided on each side face;
the distance between two clamping holes (2) arranged opposite to each other can be adjusted.

9. The mounting bracket according to claim 1, **characterized in that** at least one mounting and positioning hole (5) penetrating through the base plate is further provided on the base plate, and the mounting and positioning hole (5) is used for guiding and fixing the vehicle body domain controller (9).

10. The mounting bracket according to claim 9, **characterized in that** two mounting and positioning holes (5) are provided, and the two mounting and positioning holes (5) are respectively provided on two opposite side faces of the base plate.

11. The mounting bracket according to claim 1, **characterized by** further comprising a pre-hanging structure (7);wherein the pre-hanging structure (7) is provided on a face of the base plate opposite to the working face (1);
the pre-hanging structure (7) is used for pre-hanging the base plate on a vehicle body;
the base plate is provided with an opening structure (702);
a portion of the pre-hanging structure (7) is exposed from the opening structure (702).

12. The mounting bracket according to claim 11, **characterized in that** the pre-hanging structure (7) is a hook (701);
one end of the hook (701) is integrally connected to the base plate, and the hook (701) bends in a direction toward one face opposite to the working face (1).

13. The mounting bracket according to claim 12, **characterized in that** the base plate is provided with a recessed portion (10), and the recessed portion (10) protrudes in a direction toward one face opposite to the working face (1);the recessed portion (10) is used for adapting to the vehicle body;
the pre-hanging structure is provided on the recessed portion (10).

14. The mounting bracket according to claim 1, **characterized in that** the base plate is further provided with two connecting holes (8), and the connecting holes (8) are used for fixing the base plate on the vehicle body.

15. A vehicle, **characterized by** comprising a vehicle body domain controller (9), and the mounting bracket according to any one of claims 1-14, wherein the vehicle body domain controller (9) is fixed to the supporting surface (3) on the mounting bracket via the clamping hole (2), and the mounting bracket is fixedly connected to the vehicle body via the connecting hole (8) on the base plate.

16. The vehicle according to claim 15, **characterized in that** the vehicle body domain controller (9) is provided with at least two clamping ears and at least one positioning pin, and the clamping ears are in a clamping connection with the clamping hole (2);
the positioning pin is cooperatively connected with the mounting and positioning hole (5) on the base plate (1).

17. The vehicle according to claim 16, **characterized in that** four clamping ears are provided, and each of the clamping ears is in clamping connection with the clamping hole (2);
two positioning pins are provided, and each of the positioning pins cooperates with the mounting and positioning hole (5) for guiding.

## Patentansprüche

1. Eine Montagehalterung, **dadurch gekennzeichnet, dass** die Montagehalterung zum Montieren einer Fahrzeugkarosseriedomänensteuerungseinheit (9) verwendet wird und die Montagehalterung eine Grundplatte und mindestens zwei Klemmlöcher (2) beinhaltet; die Grundplatte eine Arbeitsfläche (1) beinhaltet; mindestens eine Stützoberfläche (3) auf der Arbeitsfläche (1) gebildet ist, wobei die Stützoberfläche (3) zum Stützen der Fahrzeugkarosseriedomänensteuerungseinheit (9) verwendet wird; die Klemmlöcher (2) auf der Grundplatte bereitgestellt sind und die Klemmlöcher (2) verwendet werden, um in einer Klemmverbindung mit der Fahrzeugkarosseriedomänensteuerungseinheit (9) zu stehen;
wobei mindestens ein erster vorstehender Abschnitt (301) auf der Grundplatte in einer Richtung der Arbeitsfläche (1) bereitgestellt ist und eine obere Oberfläche des ersten vorstehenden Abschnitts (301) die Stützoberfläche (3) bildet;
wobei ferner mindestens eine Hilfsklemmstruktur (4) auf der Arbeitsfläche (1) bereitgestellt ist und die Hilfsklemmstruktur (4) einen zweiten vorstehenden Abschnitt (401) in der Richtung der Arbeitsfläche (1) bildet; der Abstand zwischen dem Scheitelpunkt des zweiten vorstehenden Abschnitts (401) und der Arbeitsfläche (1) größer ist als der Abstand zwischen dem Scheitelpunkt des ersten vorstehenden Abschnitts (301) und der Arbeitsfläche (1);
die Hilfsklemmstruktur (4) zum Hilfsklemmen der Fahrzeugkarosseriedomänensteuerungseinheit (9) verwendet wird.

2. Montagehalterung gemäß Anspruch 1, **dadurch gekennzeichnet, dass** drei Stützoberflächen (3) bereitgestellt sind und Verbindungslinien von Mittelpunkten der drei Stützoberflächen ein Dreieck bilden;
die Stützoberfläche (3) auf der Arbeitsfläche (1) in ihrer Position verstellt werden kann.

3. Montagehalterung gemäß Anspruch 1, **dadurch gekennzeichnet, dass** vier Hilfsklemmstrukturen (4) bereitgestellt sind;
die vier Hilfsklemmstrukturen (4) auf zwei gegenüberliegenden Seitenflächen der Grundplatte bereitgestellt sind und zwei Hilfsklemmstrukturen (4) auf jeder Seitenfläche bereitgestellt sind.

4. Montagehalterung gemäß Anspruch 1, **dadurch gekennzeichnet, dass** die Arbeitsfläche (1) der Grundplatte ferner mit mindestens einer Verstärkungsrippe (6) bereitgestellt ist, die in der Richtung der Arbeitsfläche (1) vorsteht;
der Abstand zwischen dem vorstehenden Scheitelpunkt der Verstärkungsrippe (6) und der Arbeitsfläche (1) kleiner ist als der Abstand zwischen dem Scheitelpunkt des ersten vorstehenden Abschnitts (301) und der Arbeitsfläche (1).

5. Montagehalterung gemäß Anspruch 4, **dadurch gekennzeichnet, dass** drei Verstärkungsrippen (6) bereitgestellt sind und ein eingeschlossener Winkel zwischen jeweils zwei Verstärkungsrippen (6) der drei Verstärkungsrippen (6) gebildet ist.

6. Montagehalterung gemäß Anspruch 1, **dadurch gekennzeichnet, dass** die Grundplatte mit einem Biegeabschnitt bereitgestellt ist, der sich zu der Arbeitsfläche (1) hin biegt, und das Klemmloch (2) auf dem Biegeabschnitt bereitgestellt ist.

7. Montagehalterung gemäß Anspruch 6, **dadurch gekennzeichnet, dass** vier Klemmlöcher (2) bereitgestellt sind und jedes der Klemmlöcher (2) verwendet wird, um in einer Klemmverbindung mit der Fahrzeugkarosseriedomänensteuerungseinheit (9) zu stehen;
ein Abstand zwischen beliebigen zwei Klemmlöchern (2) eingestellt werden kann.

8. Montagehalterung gemäß Anspruch 7, **dadurch gekennzeichnet, dass** vier Klemmlöcher (2) auf zwei gegenüberliegenden Seitenflächen der Grundplatte bereitgestellt sind und zwei Klemmlöcher (2) auf jeder Seitenfläche bereitgestellt sind; der Abstand zwischen zwei einander gegenüberliegend angeordneten Klemmlöchern (2) eingestellt werden kann.

9. Montagehalterung gemäß Anspruch 1, **dadurch gekennzeichnet, dass** ferner mindestens ein Montage- und Positionierungsloch (5), das die Grundplatte durchdringt, auf der Grundplatte bereitgestellt ist und das Montage- und Positionierungsloch (5) zum Führen und Befestigen der Fahrzeugkarosseriedomänensteuerungseinheit (9) verwendet wird.

10. Montagehalterung gemäß Anspruch 9, **dadurch gekennzeichnet, dass** zwei Montage- und Positionierungslöcher (5) bereitgestellt sind und die zwei Montage- und Positionierungslöcher (5) jeweils auf zwei gegenüberliegenden Seitenflächen der Grundplatte bereitgestellt sind.

11. Montagehalterung gemäß Anspruch 1, **dadurch gekennzeichnet, dass** sie ferner eine Vorhängestruktur (7) beinhaltet; wobei die Vorhängestruktur (7) auf einer Fläche der Grundplatte gegenüberliegend zu der Arbeitsfläche (1) bereitgestellt ist;
die Vorhängestruktur (7) zum Vorhängen der Grundplatte an einer Fahrzeugkarosserie verwendet wird;
die Grundplatte mit einer Öffnungsstruktur (702) bereitgestellt ist;
ein Abschnitt der Vorhängestruktur (7) von der Öffnungsstruktur (702) freiliegt.

12. Montagehalterung gemäß Anspruch 11, **dadurch gekennzeichnet, dass** die Vorhängestruktur (7) ein Haken (701) ist;
ein Ende des Hakens (701) integral mit der Grundplatte verbunden ist und sich der Haken (701) in einer Richtung einer der Arbeitsfläche (1) gegenüberliegenden Fläche hin biegt.

13. Montagehalterung gemäß Anspruch 12, **dadurch gekennzeichnet, dass** die Grundplatte mit einem vertieften Abschnitt (10) bereitgestellt ist und der vertiefte Abschnitt (10) in einer Richtung einer der Arbeitsfläche (1) gegenüberliegenden Fläche hin vorsteht; der vertiefte Abschnitt (10) zum Anpassen an die Fahrzeugkarosserie verwendet wird;
die Vorhängestruktur auf dem vertieften Abschnitt (10) bereitgestellt ist.

14. Montagehalterung gemäß Anspruch 1, **dadurch gekennzeichnet, dass** die Grundplatte ferner mit zwei Verbindungslöchern (8) bereitgestellt ist und die Verbindungslöcher (8) zum Befestigen der Grundplatte an der Fahrzeugkarosserie verwendet werden.

15. Ein Fahrzeug, **dadurch gekennzeichnet, dass** es eine
Fahrzeugkarosseriedomänensteuerungseinheit (9) und die Montagehalterung gemäß einem der Ansprüche 1-14 beinhaltet, wobei die Fahrzeugkarosseriedomänensteuerungseinheit (9) an der Stützoberfläche (3) auf der Montagehalterung über das Klemmloch (2) befestigt ist und die Montagehalterung fest mit der Fahrzeugkarosserie über das Verbindungsloch (8) auf der Grundplatte verbunden ist.

16. Fahrzeug gemäß Anspruch 15, **dadurch gekennzeichnet, dass** die Fahrzeugkarosseriedomänensteuerungseinheit (9) mit mindestens zwei Klemmösen und mindestens einem Positionierungsstift bereitgestellt ist und die Klemmösen in einer Klemmverbindung mit dem Klemmloch (2) stehen;
der Positionierungsstift zusammenwirkend mit dem Montage- und Positionierungsloch (5) auf der Grundplatte (1) verbunden ist.

17. Fahrzeug gemäß Anspruch 16, **dadurch gekennzeichnet, dass** vier Klemmösen bereitgestellt sind und jede der Klemmösen in einer Klemmverbindung mit dem Klemmloch (2) steht;
zwei Positionierungsstifte bereitgestellt sind und jeder der Positionierungsstifte mit dem Montage- und Positionierungsloch (5) zum Führen zusammenwirkt.

## Revendications

1. Une console de montage **caractérisée en ce que** la console de montage est utilisée pour le montage d'un contrôleur de domaine de carrosserie de véhicule (9), et la console de montage comprend une plaque de base et au moins deux trous de serrage (2) ; la plaque de base comprend une face de travail (1) ; au moins une surface de support (3) est formée sur la face de travail (1), la surface de support (3) étant utilisée pour le support du contrôleur de domaine de carrosserie de véhicule (9) ;
les trous de serrage (2) étant disposés sur la plaque de base, et les trous de serrage (2) étant utilisés pour être dans une liaison de serrage avec le contrôleur de domaine de carrosserie de véhicule (9) ;
dans laquelle au moins une première portion saillante (301) est disposée sur la plaque de base dans une direction vers la face de travail (1), et une surface supérieure de la première portion saillante (301) forme la surface de support (3) ;
dans laquelle au moins une structure de serrage auxiliaire (4) est en outre disposée sur la face de travail (1), et la structure de serrage auxiliaire (4) forme une deuxième portion saillante (401) dans la direction vers la face de travail (1) ; la distance entre le sommet de la deuxième portion saillante (401) et la face de travail (1) est plus grande que la distance entre le sommet de la première portion saillante (301) et la face de travail (1) ;
la structure de serrage auxiliaire (4) est utilisée pour le serrage auxiliaire du contrôleur de domaine de carrosserie de véhicule (9).

2. La console de montage selon la revendication 1, **caractérisée en ce que** trois surfaces de support (3) sont prévues, et des lignes de liaison de points centraux des trois surfaces de support forment un triangle ;
la surface de support (3) peut être ajustée en position sur la face de travail (1).

3. La console de montage selon la revendication 1, **caractérisée en ce que** quatre structures de serrage auxiliaires (4) sont prévues ;
les quatre structures de serrage auxiliaires (4) sont disposées sur deux faces latérales opposées de la plaque de base, et deux structures de serrage auxiliaires (4) sont disposées sur chaque face latérale.

4. La console de montage selon la revendication 1, **caractérisée en ce que** la face de travail (1) de la plaque de base est en outre pourvue d'au moins une nervure de renfort (6) faisant saillie dans la direction vers la face de travail (1) ;
la distance entre le sommet saillant de la nervure de renfort (6) et la face de travail (1) est plus petite que la distance entre le sommet de la première portion saillante (301) et la face de travail (1).

5. La console de montage selon la revendication 4, **caractérisée en ce que** trois nervures de renfort (6) sont prévues, et un angle inclus est formé entre deux nervures de renfort (6) quelconques parmi les trois nervures de renfort (6).

6. La console de montage selon la revendication 1, **caractérisée en ce que** la plaque de base est pourvue d'une portion de cintrage se cintrant vers la face de travail (1), et le trou de serrage (2) est disposé sur la portion de cintrage.

7. La console de montage selon la revendication 6, **caractérisée en ce que** quatre trous de serrage (2) sont prévus, et chacun des trous de serrage (2) est utilisé en liaison de serrage avec le contrôleur de domaine de carrosserie de véhicule (9) ;
une distance entre deux trous de serrage (2) quelconques peut être ajustée.

8. La console de montage selon la revendication 7, **caractérisée en ce que** quatre trous de serrage (2) sont disposés sur deux faces latérales opposées de la plaque de base, et deux trous de serrage (2) sont disposés sur chaque face latérale ;
la distance entre deux trous de serrage (2) agencés à l'opposé l'un de l'autre peut être ajustée.

9. La console de montage selon la revendication 1, **caractérisée en ce qu'**au moins un trou de montage et de positionnement (5) pénétrant à travers la plaque de base est en outre disposé sur la plaque de base, et le trou de montage et de positionnement (5) est utilisé pour le guidage et la fixation du contrôleur de domaine de carrosserie de véhicule (9).

10. La console de montage selon la revendication 9, **caractérisée en ce que** deux trous de montage et de positionnement (5) sont prévus, et les deux trous de montage et de positionnement (5) sont disposés respectivement sur deux faces latérales opposées de la plaque de base.

11. La console de montage selon la revendication 1, **caractérisée par le fait qu'**elle comprend en outre une structure de pré-accrochage (7) ; dans laquelle la structure de pré-accrochage (7) est disposée sur une face de la plaque de base opposée à la face de travail (1) ;
la structure de pré-accrochage (7) est utilisée pour le pré-accrochage de la plaque de base sur une carrosserie de véhicule ;
la plaque de base est pourvue d'une structure d'ouverture (702) ;
une portion de la structure de pré-accrochage (7) est apparente par la structure d'ouverture (702).

12. La console de montage selon la revendication 11, **caractérisée en ce que** la structure de pré-accrochage (7) est un crochet (701) ;
une extrémité du crochet (701) est reliée d'un seul tenant à la plaque de base, et le crochet (701) est cintré dans une direction vers une face opposée à la face de travail (1).

13. La console de montage selon la revendication 12, **caractérisée en ce que** la plaque de base est pourvue d'une portion renfoncée (10), et la portion renfoncée (10) fait saillie dans une direction vers une face opposée à la face de travail (1) ; la portion renfoncée (10) est utilisée pour l'adaptation à la carrosserie de véhicule ;
la structure de pré-accrochage est disposée sur la portion renfoncée (10).

14. La console de montage selon la revendication 1, **caractérisée en ce que** la plaque de base est en outre pourvue de deux trous de liaison (8), et les trous de liaison (8) sont utilisés pour la fixation de la plaque de base sur la carrosserie de véhicule.

15. Un véhicule, **caractérisé par le fait qu'**il comprend un contrôleur de domaine de carrosserie de véhicule (9), et la console de montage selon l'une quelconque des revendications 1 à 14, dans lequel le contrôleur de domaine de carrosserie de véhicule (9) est fixé à la surface de support (3) sur la console de montage par l'intermédiaire du trou de serrage (2), et la console de montage est reliée de manière fixe à la carrosserie de véhicule par l'intermédiaire du trou de liaison (8) sur la plaque de base.

16. Le véhicule selon la revendication 15, **caractérisé en ce que** le contrôleur de domaine de carrosserie de véhicule (9) est pourvu d'au moins deux pattes de serrage et d'au moins une broche de positionnement, et les pattes de serrage sont dans une liaison de serrage avec le trou de serrage (2) ;
la broche de positionnement est reliée de manière coopérative au trou de montage et de positionnement (5) sur la plaque de base (1).

17. Le véhicule selon la revendication 16, **caractérisé en ce que** quatre pattes de serrage sont prévues, et chacune des pattes de serrage est en liaison de serrage avec le trou de serrage (2) ;
deux broches de positionnement sont prévues, et chacune des broches de positionnement coopère avec le trou de montage et de positionnement (5) pour le guidage.
